# EUROPEAN PATENT SPECIFICATION

(11) **EP 2 040 195 B1**
(45) Date of publication and mention of the grant of the patent: **13.03.2013**
(21) Application number: 07720934.4
(22) Date of filing: 24.04.2007
(51) Int. Cl.: G06K 9/00, G06K 7/00, H04N 5/00, H04N 7/173

(54) **POINT-READING DEVICE AND METHOD FOR OBTAINING THE NETWORK AUDIO/VIDEO FILES**
PUNKTLESEEINRICHTUNG UND VERFAHREN ZUM ERHALTEN DER NETZWERK-AUDIO/VIDEO-DATEIEN
DISPOSITIF DE LECTURE EN MODE POINT ET PROCÉDÉ D'OBTENTION DE FICHIERS AUDIO/VIDEO EN RÉSEAU

(30) Priority: 03.07.2006 CN 200610089566; 03.07.2006 CN 200610089565; 03.07.2006 CN 200610089567; 03.07.2006 CN 200610089568
(43) Date of publication of application: 25.03.2009
(73) Proprietor: Beijing Huaqi Information Digital Technology Co., Ltd., Haidian District Beijing 100080 (CN); Beijing Huaqi Digital Lab Co., Ltd., Beijing 100080 (CN)
(72) Inventor: ZHOU, Chaohui, Beijing 100080 (CN)
(74) Representative: Beck & Rössig European Patent Attorneys
(86) International application number: PCT/CN2007/001361
(87) International publication number: WO 2008/006273

(56) References cited:
- EP-A2- 0 744 856
- WO-A1-98/24036
- CN-A- 1 311 883
- CN-A- 1 464 480
- JP-A- 2003 030 553
- US-A- 5 640 193
- US-A- 5 804 803
- US-A- 5 971 277
- US-A1- 2006 124 742

## Description

### Field of the Invention

The invention relates a device and method for obtaining audio/video files from network servers ( in the following also refered to as network audio/video files).

### Background of the Invention

With the development of the Internet, the network resource has become a necessary information source in the people's daily pursuit life. More and more data would be stored at network servers to facilitate obtaining, but people usually worry about how to obtain the desired information from the vast network resource. In addition, it has become a fashion to obtain information via the Internet, but many people are still unable to go online or persecuted by the time and energy spent on going online to obtain the network resource.

In addition, it has been mature for the present method to make image codes on paper or other objects and the device applying the image codes. The present technology, such as China patent no.02122633.4 and China patent no.200420067103.1, is: pre-setting the image codes on the object surface on which printed target object, obtaining the codes via a image-reading device, decoding the codes by a processing unit to obtain the corresponding information, such as audio information etc, stored in the memory, so that it is accomplished that the relevant information corresponding to the target object could be heard or seen by clicking the target on the object with a device such as a stylus. If the above technology could be combined with network technology, a very convenient device for obtaining the network audio/video files could be provided for users.

JP 2003-30553 A discloses a bar code reader which is used to offer new information of goods and service to customers. Stores utilize a bar code reader to read a bar code printed on a catalog, and the predetermined website information embedded in the bar code is accessed. The server of the corresponding website feeds back information of the new goods and services to the terminal device such as a printer or screen, etc. of the store. The information contains text data, voice data, and image data. The address of the website of the server is set directly in the bar code, which makes the bar codes complicated.

US 5,971,277 discloses a devices according to the preamble of claim 1 and a method according to the preamble of claim 9. More specifically, it discloses a client computer with a bar code reader, capable of reading a bar code. The client computer translates the code into a URL (Uniform Resource Locator) that specifies both a server computer and the location within the server of information that is relevant to the object. The client computer transmits the URL to the server computer, receives the information related to the object from the server computer, and communicates the information to the customer. Further, in a second embodiment of US 5,971,277 the bar code represents a product code (UPC) which may e.g. be a number. In this context US 5,971,277 suggests an information table comprising several attributes allocated to the UPC, said attributes including a product name and an URL for obtaining information about the product. When information about the product is required, this URL is used for an internet connection. The table links a static URL with the bar code.

### Summary of the Invention

The object of the present invention is to provide a device for easily obtaining network audio/video files by reading image codes on a table-on-demand without need of operating a computer artificially by the user. Moreover, the invention aims at providing a corresponding method.

This technical problem is solved by the device and method as indicated in the claims.

The advantages of the device, in the following also called "point-reading device" and method of the present invention for obtaining network audio/video files are as follows:
1. In the present invention, reading the image codes printed on the table-on-demand unit via the point-reading device, utilizing the information codes gained by decoding the image codes to obtain the attribute of the target files, then controlling the network module to obtain the target files stored on the network servers according to the attribute of the target files, therefore it being achieved to obtain the audio/video target files via the Internet, while the manner of obtaining the target files just like the above-mentioned enabling the users who can not or do not want to go online to obtain the target files immediately and conveniently;
2. In the present invention, the point-reading device for obtaining the target files via the Internet being able to learn the network addresses of the network servers from which the target files can be obtained by the means of searching by the search engines or pre-setting, then obtaining the audio/video target files via the IP addresses, therefore enabling the user to obtain the desired target files on the Internet rapidly and without any computer operation.
3. In the present invention, the target files obtained via the Internet may being stored in the buffer storage according to the instruction to play online, therefore making the point-reading device being able to achieve to play the desired audio/video files without the need of setting the unit for storing the target files, Moreover, the above-mentioned target files may also being stored in the memory so as to download the desired audio/video files.

### Brief Description of the Drawings

FIG 1 schematically shows the configuration of the point-reading device in accordance with the present invention.
FIG 2 schematically shows the configuration of the point-reading system for obtaining the network audio/video files in accordance with the present invention.
FIG 3 schematically shows the table-on-demand unit in accordance with the present invention.
FIG 4 schematically shows the configuration of the point-reading device provided with speaker and display screen in accordance with the present invention.
FIG 5 is a flow diagram of an embodiment about the point-reading device obtaining the target files, according to the present invention.
FIG 6 is a flow diagram of another embodiment about the point-reading device obtaining the target files, which, however, does not form a part of the present invention.

### Embodiments of the Invention

In order to further illustrate the technical means which is used to achieve the intended purpose and the efficacy of the present invention, the following specially describe the point-reading device and method for obtaining the network audio/video files, which are proposed according to the present invention, and its embodiments, structure, characteristics and efficacy, incorporating the accompany drawings and the preferred embodiment.

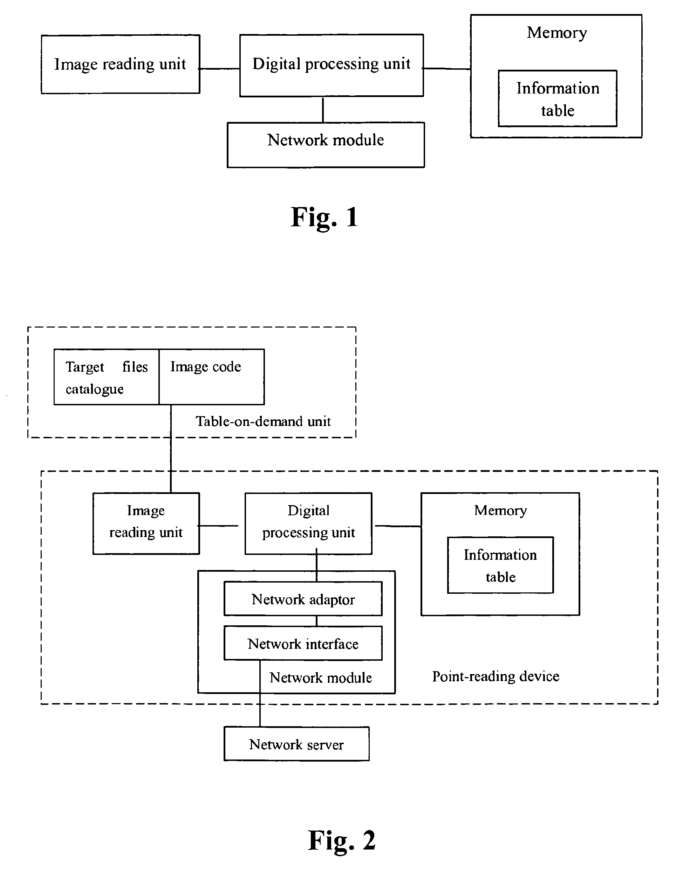

As shown in FIG 1, the point-reading device of the present invention for obtaining the network audio/video files comprises: an image reading unit, it obtaining the image codes including the information codes representing the audio/video files; a digital processing unit, it being connected to the image reading unit, receiving and decoding the image codes sent from the image reading unit to obtain the information codes representing the audio/video files,; a memory for storing data, it being connected to the digital processing unit, and storing the information table that establishes the corresponding relation between the information codes representing the audio/video target files and the attribute information for obtaining the audio/video target files; a network module, it establishing the connection between the digital processing unit with the network server, including a network adaptor and network interface, wherein the network adaptor is connected to the digital processing unit and the connection is established between the network interface of the above-mentioned and the network interface of external device such as PC. Wherein an operation system is provided in the digital processing unit, the operation system supports the network protocol; the digital processing unit obtains the attribute information corresponding to the information codes according to the information table, and controls the network module to obtain the audio/video target files stored in the network server according to what the attribute information provides.

The above-mentioned network adaptor establishes the connection between the digital processing unit and the network interface; The digital processing unit establishes the connection between the memory and the network interface and processes the data transmission between the memory and external device. In addition, the network module may also be set to connect to the Internet directly instead to connect to the network servers via external device such as PC etc,.

FIG 2 schematically shows a structure diagram of the point-reading system for obtaining the network audio/video files in accordance with the present invention. While obtaining the network multimedia files by using the point-reading device of the present invention, the user obtains the available target files by reading the target file catalogue in the table-on-demand unit, then reads the image codes in the table-on-demand unit via using the point-reading device to obtain the information codes representing the attribute of the target files included in the image codes, and utilizes the said attribute of the target files to obtain the target files from the network servers.

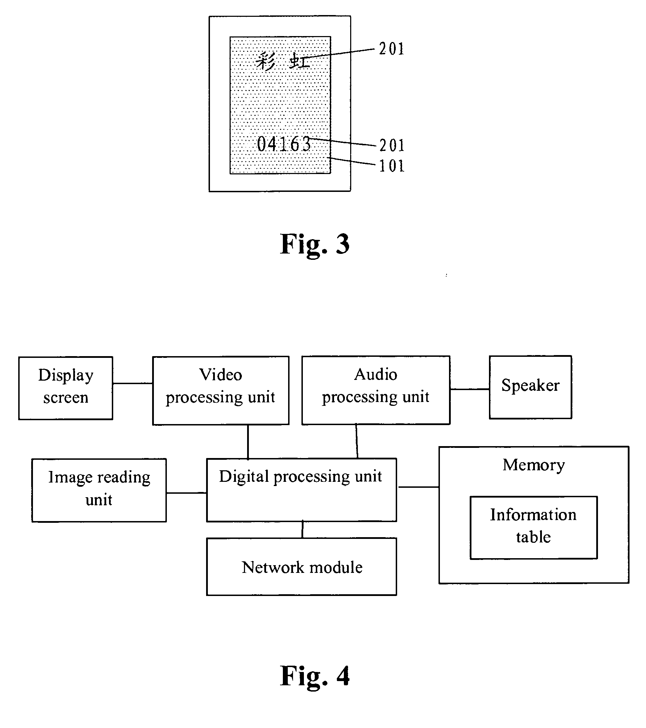

FIG 3 shows a diagram of the table-on-demand unit in accordance with the present invention. The above-mentioned table-on-demand unit comprises the target files catalogue 201 and the image codes 101 corresponding to each of the target files, the target files content 201 and the image codes 101 are pre-set on the surface of one object with the different color-code printing-ink. The target files content 201 is the characters or graphics representing the target files. The above-mentioned image codes 101 includes the information codes representing the attribute of the target files, and the above-mentioned characters or graphics representing the target files is set corresponding to the image codes 101 including the information codes representing the attribute of the target files. As shown in the figure, the characters and their number for ordering the song named " 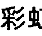 I" is mounted on an object surface as the target file content, the image codes 101 is set in the region shared by the characters and their number. The object on which the target files content 201 and the image code 101 are printed is made of paper or plastic.

In particular, the image reading unit may comprise optical module and image sensor. The optical module mainly includes illuminant, lens, and filter connected in turn. The illuminant light the regions where the image codes 101 could be recognized, the lens magnifies the image of the image codes 101, the image is filtered by the filter. The image sensor obtains the optical information filtered by the filter, and output it after translates it into digital electrical signal. It is suitable to provide a Infrared light source as the above-mentioned illuminant, and two Infrared lights are preferred. The image sensor is CCD sensor or CMOS sensor. The light emitted from the image obtaining unit can be the light with other particular color such as blue, etc.

The image codes 101 is a layer of dots on the surface of paper or the other objects, which is printed with the Infrared sensitive printing-inks or the printing-inks with other particular color (In the Figure, the dots layer are magnified in certain multiples, in normal situation, dots are not easily to be identified by a naked eye). In order to avoid the bad situation of reading wrongly or inaccurately, the color -code of printing-inks used for the dots is not allowed to be same with the color-code of the printing-inks used for the target file catalogue 201 or the objects' surface. The technology about the setting of the image codes and obtaining the image by the image reading unit have been described in China Application No.02122633.4 and China Patent No.200420067103.1, so no more detailed here.

Reference to the FIG 4, the figure is shows a a structure schematic diagram of the point-reading device mount provided with speaker and display screen in accordance with the present invention. Wherein, Therein the point-reading device also comprises an audio processing unit, a speaker connecting each other, or/and a video processing unit, a display screen connecting each other. The audio processing unit and the video processing unit are respectively connected with to the digital processing unit respectively, the digital processing unit transmits outputs the audio/video files sent from the network module to the audio processing unit and the video processing unit respectively, and then the above-mentioned audio processing unit extracts and decodes the received audio files and converses digital analog takes the digital-analog conversion (DAC), the above-mentioned speaker plays the processed audio files; the above-mentioned video processing unit decompresses extracts and decodes the received video files so that as to the above-mentioned display screen could play the processed video files on the display screen. Via the above-mentioned device structure setup, enable the target files obtained from the network servers to be processed in the point-reading device and to play out.

The above-mentioned digital processing unit comprises a buffer storage, the digital processing unit receives the audio/video target files sent from the network module, and stores the said target files in the buffer storage to play online. Moreover, the above-mentioned digital processing unit can as well control the audio/video target files sent from the network module to store in the memory.

In more specially details, the above-mentioned point-reading device can separates the image reading unit from its main body including the digital processing unit by manner of wireless or with cable. For example, the above-mentioned image reading unit comprises a first wireless network interface, the digital processing unit comprises a second wireless network interface that can transmit data with the first wireless network interface.

The attribute of the target files is either the Name Information of the audio/video target files, or the network addresses of the servers storing the audio/video target files. If the attribute of the target files is the Name Information, the point-reading device of the present invention may obtain the network addresses of the network server storing the target files with the same Name Information via searching by the search engines, so that the target files may be obtained from the network server.

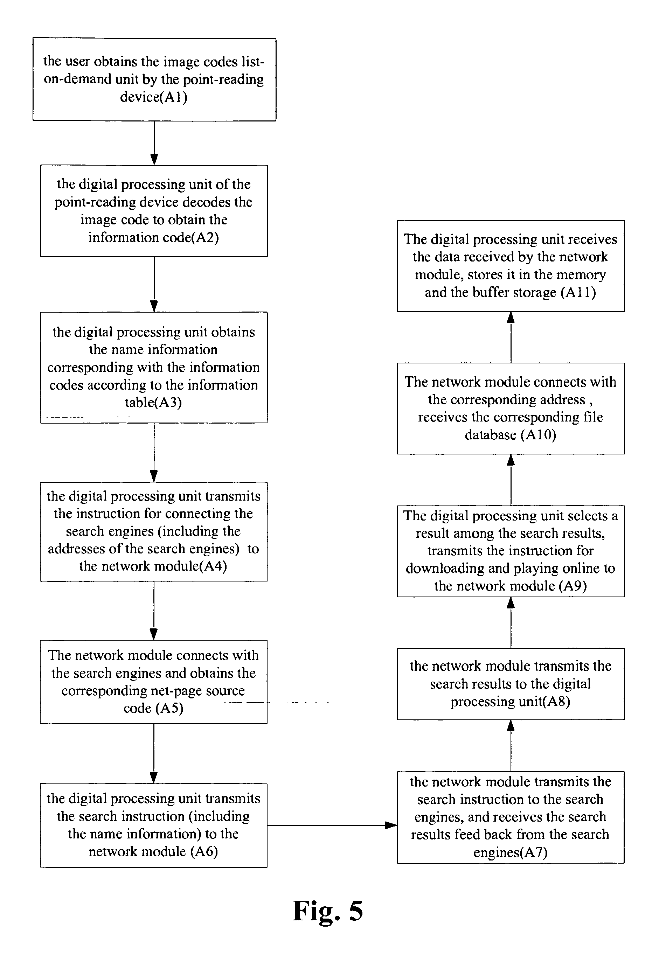

Reference to FIG 5, the figure is a flow diagram of an embodiment about the point-reading device obtaining the target files, according to the present invention.. In the embodiment, the point-reading device of the present invention learns the Name Information of the desired target files via the image codes, thereby connects the search engines to execute the duty of search and receiving the target files. The method that the user obtains the audio/video target files using the network servers by the point-reading device is as following:

A0, creating a information table obtained by decoding the image codes in the point-reading device, the information table shows the corresponding relation between the information codes representing the target files and the Name Information of the target files, storing the IP addresses of the appointed search engines and pre-setting the instruction which controls the connection between the point-reading device and the search engines, and the search instruction which make the search engines take the Name Information of the target files as the key words to search the network addresses of the network servers storing the target files with the same name as the Name Information;
A1, the user learns the character or graphics of the obtainable target files via the table-on-demand unit, then obtains the pre-set image codes on the location corresponding to the character or graphic of the selected target files using the image reading unit of the point-reading device.
A2, the digital processing unit of the point-reading device receiving the image codes obtained by the image reading unit, and decoding the image codes to obtain the information codes representing the target files;
A3, the digital processing unit obtaining the Name Information of the target files corresponding with the information codes according to the information table;
A4, the digital processing unit sending the instruction, which make the point-reading device be connected to the appointed search engine of the Internet, to the network module;
A5, the network module of the point-reading device connecting to the search engines and obtaining the source code of the corresponding web-page;
A6, the digital processing unit sending the search instruction to the network module, the Name Information of the target file which would be searched being included in the search instruction;
A7, the network module transmitting the search instruction to the search engines, and make the search engines, according to the Name Information of the target files, search IP address of the network servers storing the said target files, and receives the search results fed-back by the search engines;
A8, the network module transmitting the search results fed-back by the search engines to the digital processing unit;
A9, connecting the point-reading device to the network servers in the search results, and downloads or plays online the target files stored in the network servers.

In particular, after the digital processing unit receives the search results, the following steps also are included:
A10, selecting a result from the search results, and transmitting the instruction of downloading or playing online to the network module, the network module connects to the network addresses indicated in the selected search results, thereby obtains the corresponding audio/video target files, and sends the obtained target files to the digital processing unit.
A11, the digital processing unit stores the received audio/video target files in the memory or the buffer storage according to the instruction of downloading or playing online.

The above-mentioned digital processing unit may select the network addresses of the network servers with the fastest connection from the search results fed back from the network module, and makes the network module connect to the network servers, and obtains the target files stored in the network servers.

If the attribute of the above-mentioned target files is the network addresses of the network servers where the audio/video target files be, the point-reading device of the present invention obtains the target files via connecting the network addresses of the network servers.

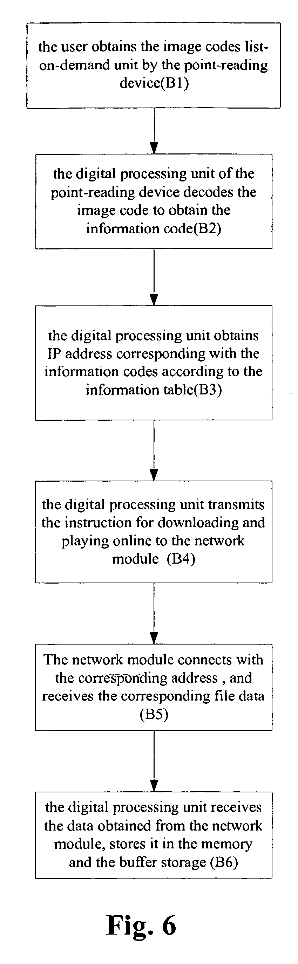

Reference to the FIG 6, the figure is a flow diagram of another embodiment about the point-reading device obtaining the target files, according to the present invention. In the embodiment, the point-reading device learns the network address of the network servers storing the target files via the image codes, then may connect to the network addresses and obtains the target files. The method that the user obtains the audio/video target files from the network server using the point-reading device is as followings:
B0, creating a information table obtained by decoding the image codes in the point-reading device, the information table shows the corresponding relation between the information codes representing the target files and the network addresses of the network servers storing the target files;
B1, the user learns the character or graphics of the obtainable target files via the table-on-demand unit, then obtains the pre-set image codes on the location corresponding to the character or graphic of the selected target files using the image reading unit of the point-reading device.
B2, the digital processing unit of the point-reading device receiving the image codes obtained by the image reading unit, and decoding the image codes to obtain the information codes;
B3, the digital processing unit obtaining the network addresses of the network servers storing the target files from the information table according to the information codes representing the target files;
B4, connecting the point-reading device with the network servers storing the target files according to the network addresses, and downloading or playing online the target files stored on the network servers.

In particular, after the digital processing unit receives the search results, the following steps are also included:
B5, the digital processing unit transmits the instruction of downloading or playing online to the network module, according to the instruction, the network module obtains the audio/video target files from the network servers, and sends the said target files to the digital processing unit.
B6, the digital processing unit stores the received audio/video target file data in the memory or the buffer storage according to the instruction of downloading or playing online, so that the function of downloading or playing online is achieved.

In addition, according to the obtained attribute information of the target files, the point-reading device of the present invention can judge what it has obtained is either the name information of the target files or the network addresses of the network servers storing the target files, thereby the corresponding treatment can be taken differentiated. The point-reading device of the present invention obtains the corresponding information via the image codes, and the corresponding treatment can be taken according to the judgment whether the corresponding information is the Name Information of the target files or the network addresses of the network servers storing the target file, so as to receive the target files. That is, the user may also take the point-reading device to obtain the audio/video target files stored in the network servers by the following method:

After obtaining the attribute information of the target files corresponding with the information codes according to the information table, the digital processing unit judges whether the attribute information is the Name Information of the target files or the network addresses of the network servers storing the target files, if the attribute information is the Name Information of the target files, the step A4 is executed; if the attribute information is the network addresses information of the network servers storing the target files, the step B4 is executed.

## Claims

1. A point-reading device for obtaining network audio/video files, comprising:
an image reading unit for obtaining image codes including information codes representing audio/video target files;
a digital processing unit connecting with the image reading unit, receiving the image codes sent from the image reading unit and decoding the image codes to obtain the information codes representing the audio/video target files;
wherein the point-reading device for obtaining the network audio/video files further comprises:
a memory for storing data connecting with the digital processing unit and storing an information table that creates a corresponding relation between the information codes representing the audio/video target files and an attribute information used for obtaining the audio/video target files;
a network module for establishing connection between the digital processing unit and a network server;
wherein an operation system supporting network protocol is provided in the digital processing unit and the digital processing unit is configured to obtain the attribute information corresponding to the information codes according to the information table and to control the network module to obtain the audio/video target files stored at the network servers according to what the attribute information provides;
wherein
said attribute information of the target files is Name Information of the audio/video target files;
the memory stores network addresses of search engines and search instructions for controlling the network module to obtain the addresses of the network servers storing the audio/video target files according to the Name Information and the network addresses of the search engines; and
the digital processing unit sends search instruction to the network module after receiving the Name Information of the target files.

2. The point-reading device for obtaining network audio/video files according to claim 1, further comprising:
an audio processing unit connecting with a speaker, and/or a video processing unit connecting with a display screen,
wherein
the audio processing unit and the video processing unit are connected to the digital processing unit respectively;
the audio/video files sent from the network module are output to the audio processing unit and the video processing unit respectively by the digital processing unit;
the audio processing unit extracts and decodes the received audio files and takes a digital-analog conversion,
the speaker plays the processed audio files; and
the video processing unit extracts and decodes the received video files so that the above-mentioned processed video files can be played on the above-mentioned display screen.

3. The point-reading device for obtaining network audio/video files according to claim 1, wherein said search instruction comprises:
instructions for connecting the network module with the network addresses of search engines to connect the network module to corresponding web page;
instructions for making the search engines search the addresses of the network servers storing the target files with the same name as the Name Information of the audio/video target files; and
instructions for obtaining search results of the search engines.

4. The point-reading device for obtaining network audio/video files according to claim 3, wherein said digital processing unit selects the network servers with the fastest connection from the search results back from the network module, and obtains the audio/video target files from the network servers.

5. The point-reading device for obtaining network audio/video files according to claim 1, wherein the said digital processing unit sends the audio/video target files to the network server, downloads the audio/video target files or plays them online via the network module.

6. The point-reading device for obtaining network audio/video files according to claim 1, wherein said image reading unit is connected to said digital processing unit in a wireless manner.

7. The point-reading device for obtaining network audio/video files according to claim 1, wherein said image reading unit comprises an optical module and an image sensor, the optical module includes illuminant, lens and filter connected in turn, and said image sensor is a CCD sensor or a CMOS sensor.

8. The point-reading device for obtaining network audio/video files according to claim 1, wherein said image codes are micro-code printed by infrared-photosensitive ink.

9. A method for obtaining network audio/video files using a table-on-demand unit which is pre-set withimage codes representing target files and a point-reading device with the capability to read the image codes; the said method comprises:
A0, creating an information table obtained by decoding the image codes in the point-reading device, wherein the information table shows corresponding relation between the information codes representing the target files and the Name Information of the target files, storing the IP addresses of appointed search engines and pre-setting the instruction which controls the connection between the point-reading device and the search engines, and the search instruction which makes the search engines take the Name Information of the target files as the key words to search the network addresses of the network servers storing the target files with the same name as the Name Information;
A1, obtaining the image codes set in the table-on-demand unit via the image reading unit of the point-reading device;
A2, the digital processing unit of the point-reading device receiving the image codes obtained by the image reading unit, and decoding the image codes to obtain the information codes representing the target files;
A3, the digital processing unit obtaining the Name Information of the target files corresponding with the information codes according to the information table;
A4, the digital processing unit sending the instruction, which make the point-reading device be connected to the appointed search engine of the Internet, to the network module;
A5, the network module of the point-reading device connecting to the search engines and obtaining the source code of corresponding web-page;
A6, the digital processing unit sending the search instruction that contains the Name Information of the target file to be searched to the network module;
A7, the network module transmitting the search instruction to the search engines, and making the search engines, according to the Name Information of the target files, search IP address of the network servers storing the said target files, and receiving the search results fed-back by the search engines;
A8, the network module transmitting the search results fed-back by the search engines to the digital processing unit;
A9, connecting the point-reading device to the network servers in the search results, and downloading or playing the target files stored in the network servers online.

10. The method according to claim 9, wherein the said method for obtaining the network audio/video file further comprises:
the digital processing unit of the point-reading device selects the IP address of the network servers with the fastest connection speed from the search results, and makes the point-reading device connect with the network servers so as to obtain the target files.

## Patentansprüche

1. Punktleseeinrichtung zum Erhalten von Netzwerk-Audio-/Video-Dateien, umfassend:
eine Bildleseeinheit zum Erhalten von Bild-Codes, die Informationscodes enthalten, welche die Audio-/Video-Zieldateien repräsentieren;
eine digitale Verarbeitungseinheit, die mit der Bildleseeinheit verbunden ist und
die von der Bildleseeinheit gesendeten Bild-Codes empfängt und diese Bild-Codes dekodiert, um die Informationscodes zu erhalten, welche die Audio-/Video-Zieldateien repräsentieren;
wobei die Punktleseeinrichtung zum Erhalten der Netzwerk-Audio-/Video-Dateien weiterhin umfasst:
einen Speicher zum Speichern von Daten, der mit der digitalen Verarbeitungseinheit verbunden ist und eine Informationstabelle speichert, die die entsprechende Beziehung zwischen den Informationscodes, welche die Audio-/Video-Zieldateien repräsentieren und Attributinformationen herstellt, die zum Erhalten der Audio-/Video-Zieldateien verwendet werden;
ein Netzwerkmodul zum Herstellen einer Verbindung zwischen der digitalen Verarbeitungseinheit und einem Netzwerkserver;
wobei ein Betriebssystem, welches das Netzwerkprotokoll unterstützt, in der digitalen Verarbeitungseinheit bereitgestellt ist und die digitale Verarbeitungseinheit dazu konfiguriert ist, die Attributinformationen abzurufen, welche gemäß der Informationstabelle den Informations-Codes entsprechen, und das Netzwerkmodul so zu steuern, dass die in den Netzwerkservern gespeicherten Audio-/Video-Zieldateien gemäß den Attributinformationen abgerufen werden; wobei
besagte Attributinformationen der Zieldateien die Namensinformationen der Audio-/Video-Zieldateien sind;
der Speicher die Netzwerkadressen von Suchmaschinen und Suchbefehle speichert, um das Netzwerkmodul so zu steuern, dass es die Adressen der Netzwerkserver, auf welchen die Audio-/Video-Zieldateien gemäß der Namensinformationen gespeichert sind, und die Netzwerkadressen der Suchmaschinen abruft; und
die digitale Verarbeitungseinheit nach dem Erhalten der Namensinformationen der Zielinformationen einen Suchbefehl an das Netzwerkmodul sendet.

2. Punktleseeinrichtung zum Erhalten von Netzwerk-Audio-/Video-Dateien nach Anspruch 1, die weiterhin umfasst:
eine Audio-Verarbeitungseinheit, die an einen Lautsprecher angeschlossen ist und/oder eine Video-Verarbeitungseinheit, die an einen Bildschirm angeschlossen ist,
wobei
die Audio-Verarbeitungseinheit und die Video-Verarbeitungseinheit jeweils an die digitale Verarbeitungseinheit angeschlossen sind;
die von dem Netzwerkmodul gesendeten Audio-/Video-Dateien von der digitalen Verarbeitungseinheit an die Audio-Verarbeitungseinheit beziehungsweise die Video-Verarbeitungseinheit gesendet werden;
die Audio-Verarbeitungseinheit die empfangenen Audio-Dateien extrahiert und dekodiert und eine Digital-Analog-Umwandlung vornimmt, der Lautsprecher die verarbeiteten Audio-Dateien abspielt; und
die Video-Verarbeitungseinheit die empfangenen Video-Dateien so extrahiert und dekodiert, dass die oben erwähnten verarbeiteten Video-Dateien auf dem oben erwähnten Bildschirm abgespielt werden können.

3. Punktleseeinrichtung zum Erhalten von Netzwerk-Audio-/Video-Dateien nach Anspruch 1, wobei der Suchbefehl umfasst:
Befehle zum Verbinden des Netzwerkmoduls mit den Netzwerkadressen von Suchmaschinen, um das Netzwerkmodul mit der entsprechenden Webseite zu verbinden;
Befehle zum Auslösen der Suche der Suchmaschinen nach den Adressen der Netzwerkserver, auf welchen die Zieldateien mit denselben Namen wie die Namensinformationen der Audio-/Video-Zieldateien gespeichert sind; und
Befehle zum Erhalten der Suchergebnisse der Suchmaschinen.

4. Punktleseeinrichtung zum Erhalten von Netzwerk-Audio-/Video-Dateien nach Anspruch 3, wobei die digitale Verarbeitungseinheit die Netzwerkserver mit der schnellsten Verbindung aus den Suchergebnissen des Netzwerkmoduls auswählt, und die Audio-/Video-Zieldateien von den Netzwerk-Servern erhält.

5. Punktleseeinrichtung zum Erhalten von Netzwerk-Audio-/Video-Dateien nach Anspruch 1, wobei die digitale Verarbeitungseinheit die Audio-/Video-Zieldateien an den Netzwerk-Server sendet, die Audio-/Video-Zieldateien herunterlädt oder online über das Netzwerkmodul abspielt.

6. Punktleseeinrichtung zum Erhalten von Netzwerk-Audio-/Video-Dateien nach Anspruch 1, wobei die Bildleseeinheit drahtlos mit der digitalen Verarbeitungseinheit verbunden ist.

7. Punktleseeinrichtung zum Erhalten von Netzwerk-Audio-/Video-Dateien nach Anspruch 1, wobei die Bildleseeinheit ein optisches Modul und einen Bildsensor umfasst, das optische Modul eine Lichtquelle, eine Linse und einen wiederum damit verbundenen Filter aufweist, und der Bildsensor ein CCD-Sensor oder ein CMOS-Sensor ist.

8. Punktleseeinrichtung zum Erhalten von Netzwerk-Audio-/Video-Dateien nach Anspruch 1, wobei die Bild-Codes Mikrocodes sind, die mit infrarotlichtempfindlicher Tinte gedruckt sind.

9. Verfahren zum Erhalten von Netzwerk-Audio-/Video-Dateien unter Verwendung eines On-Demand-Tischgeräts, das mit Bild-Codes voreingestellt ist, welche die Zieldateien repräsentieren, und unter Verwendung einer Punktleseeinrichtung mit der Fähigkeit, die Bild-Codes zu lesen; wobei das Verfahren umfasst:
A0 Erstellen einer Informationstabelle, die durch Dekodieren der Bild-Codes in der Punktleseeinrichtung erhalten wird, wobei die Informationstabelle die entsprechende Beziehung zwischen den Informationscodes, welche die Zieldateien repräsentieren und den Namensinformationen der Zieldateien aufzeigt, Speichern der IP-Adressen von festgelegten Suchmaschinen und Voreinstellen des Befehls, der die Verbindung zwischen der Punktleseeinrichtung und den Suchmaschinen steuert, und des Suchbefehls, der die Suchmaschinen dazu veranlasst, die Namensinformationen der Zieldateien als Schlüsselworte für die Suche nach den Netzwerkadressen der Netzwerk-Server zu verwenden, welche die Zieldateien mit denselben Namen wie die Namensinformationen speichern;
A1 Erhalten der in dem On-Demand-Tischgerät voreingestellten Bild-Codes über die Bildleseeinheit der Punktleseeinrichtung;
A2, Empfangen der von der Bildleseeinheit erhaltenen Bild-Codes in der digitalen Verarbeitungseinheit der Punktleseeinrichtung und Dekodieren der Bild-Codes zum Erhalten der Informationscodes, welche die Zieldateien repräsentieren;
A3, Abrufen der Namensinformationen der Zieldateien, die gemäß der Informationstabelle den Informationscodes entsprechen, in der digitalen Verarbeitungseinheit;
A4, Senden des Befehls, der die Punktleseeinheit mit der festgelegten Internet-Suchmaschine verbindet, an das Netzwerkmodul durch die digitale Verarbeitungseinheit;
A5, Verbinden der Punktleseeinrichtung mit den Suchmaschinen und Abrufen des Quellcodes der entsprechenden Webseite durch das Netzwerkmodul;
A6, Senden des Suchbefehls mit den Namensinformationen der zu suchenden Zieldatei an das Netzwerkmodul durch die digitale Verarbeitungseinheit;
A7, Senden des Suchbefehls an die Suchmaschinen durch das Netzwerkmodul, und Veranlassen der Suchmaschinen dazu, gemäß den Namensinformationen der Zieldateien nach den IP-Adressen der Netzwerkserver zu suchen, welche die Zieldateien speichern, und Empfangen der von den Suchmaschinen gelieferten Ergebnisse;
A8, Senden der von den Suchmaschinen gelieferten Ergebnisse an die digitale Verarbeitungseinheit durch das Netzwerkmodul;
A9, Verbinden der Punktleseeinrichtung mit den Netzwerkservern aus den Suchergebnissen und Herunterladen oder online erfolgendes Abspielen der in den Netzwerk-Servern gespeicherten Zieldateien.

10. Verfahren nach Anspruch 9, wobei das Verfahren zum Erhalten der Netzwerk-Audio-/Video-Dateien weiterhin umfasst:
Auswählen der IP-Adressen der Netzwerk-Server mit der schnellsten Verbindungsgeschwindigkeit aus den Suchergebnissen durch die digitale Verarbeitungseinheit der Punktleseeinrichtung und Verbinden der Punktleseeinrichtung mit den Netzwerk-Servern, um die Zieldateien abzurufen.

## Revendications

1. Dispositif de lecture de points pour obtenir des fichiers audio/vidéo de réseau comprenant :
une unité de lecture d'images pour obtenir des codes d'image comprenant des codes d'informations qui représentent des fichiers de sortie audio/vidéo ;
une unité de traitement numérique reliée à l'unité de lecture d'images qui reçoit les codes d'image envoyés par l'unité de lecture d'images et qui décode les codes d'image pour obtenir les codes d'informations qui représentent les fichiers de sortie audio/vidéo,
dans lequel le dispositif de lecture de points pour obtenir les fichiers audio/vidéo de réseau comprend de plus :
une mémoire pour stocker les données reliées à l'unité de traitement numérique et pour stocker un tableau d'informations qui crée une relation correspondante entre les codes d'informations qui représentent les fichiers de sortie audio/vidéo et des informations d'attributs utilisées pour obtenir les fichiers de sortie audio/vidéo ;
un module de réseau pour établir la connexion entre l'unité de traitement numérique et un serveur réseau,
dans lequel un protocole réseau de support de système d'exploitation est fourni dans l'unité de traitement numérique et l'unité de traitement numérique est configurée pour obtenir les informations d'attribut correspondant aux codes d'informations selon le tableau d'informations et pour commander le module de réseau pour obtenir les fichiers de sortie audio/vidéo stockés sur les serveurs de réseau selon ce que donnent les informations d'attributs,
dans lequel lesdites informations d'attributs des fichiers de sortie sont l'information du nom des fichiers de sortie audio/vidéo,
la mémoire stocke les adresses de réseau des moteurs de recherche et les instructions de recherche pour commander le module de réseau pour obtenir les adresses des serveurs de réseau qui stockent les fichiers de sortie audio/vidéo selon l'information du nom et les adresses de réseau des moteurs de recherche et
l'unité de traitement numérique envoie des instructions de recherche au module de réseau après avoir reçu l'information du nom des fichiers de sortie.

2. Dispositif de lecture de points pour obtenir des fichiers audio/vidéo de réseau selon la revendication 1 comprenant de plus :
une unité de traitement audio reliée à un haut-parleur et/ou une unité de traitement vidéo reliée à un écran d'affichage,
dans lequel
l'unité de traitement audio et l'unité de traitement vidéo sont reliées chacune à l'unité de traitement numérique,
les fichiers audio/vidéo envoyés par le module de réseau sont sortis respectivement à l'unité de traitement audio et à l'unité de traitement vidéo par l'unité de traitement numérique,
l'unité de traitement audio extrait et décode les fichiers vidéo reçus et fait une conversion numérique-analogique,
le haut-parleur lit les fichiers audio traités et
l'unité de traitement vidéo extrait et décode les fichiers vidéo reçus si bien que les fichiers vidéo traités mentionnés ci-dessus peuvent être lus sur l'écran d'affichage ci-dessus mentionné.

3. Dispositif de lecture de points pour obtenir des fichiers audio/vidéo de réseau selon la revendication 1 dans lequel lesdites instructions de recherche comprennent :
des instructions pour relier le module de réseau aux adresses de réseau des moteurs de recherche pour relier le module de réseau à la page web correspondante ;
des instructions pour faire rechercher par les moteurs de recherche les adresses des serveurs de réseau qui stockent les fichiers de sortie avec le même nom que l'information du nom des fichiers de sortie audio/vidéo et
des instructions pour obtenir des résultats de recherche des moteurs de recherche.

4. Dispositif de lecture de points pour obtenir des fichiers audio/vidéo de réseau selon la revendication 3 dans lequel ladite unité de traitement numérique sélectionne les serveurs de réseau avec la connexion la plus rapide dans les résultats de recherche renvoyés par le module de réseau et obtient les fichiers de sortie audio/vidéo des serveurs de réseau.

5. Dispositif de lecture de points pour obtenir des fichiers audio/vidéo de réseau selon la revendication 1 dans lequel ladite unité de traitement numérique envoie les fichiers de sortie audio/vidéo au serveur de réseau, télécharge les fichiers de sortie audio/vidéo ou les lit en ligne par l'intermédiaire du module de réseau.

6. Dispositif de lecture de points pour obtenir des fichiers audio/vidéo de réseau selon la revendication 1 dans lequel ladite unité de lecture d'images est reliée à ladite unité de traitement numérique sans fil.

7. Dispositif de lecture de points pour obtenir des fichiers audio/vidéo de réseau selon la revendication 1 dans lequel ladite unité de lecture d'images comprend un module optique et un détecteur d'images, le module optique comprend un illuminant, une lentille et un filtre connectés successivement et ledit capteur d'images est un capteur CDD ou un capteur CMOS.

8. Dispositif de lecture de points pour obtenir des fichiers audio/vidéo de réseau selon la revendication 1 dans lequel lesdits codes d'images sont des microcodes imprimés par de l'encre photosensible infrarouge.

9. Procédé d'obtention des fichiers audio/vidéo réseau utilisant une unité de tableau sur demande qui est préréglée avec des codes d'images représentant des fichiers de sortie et un dispositif de lecture de points avec la capacité de lire les codes d'images, ledit procédé comprenant :
A0, création d'un tableau d'informations obtenues par le décodage des codes d'image dans le dispositif de lecture de points, le tableau d'informations montrant la relation correspondante entre les codes d'information représentant les fichiers de sortie et
l'information du nom des fichiers de sortie, stockage des adresses IP de moteurs de recherche nommés et préréglage des instructions qui commandent la connexion entre le dispositif de lecture de points et les moteurs de recherche et des instructions de recherche qui font prendre aux moteurs de recherche l'information du nom des fichiers de sorties comme mots-clés pour rechercher les adresses de réseau des serveurs de réseau stockant les fichiers de sortie avec le même nom que l'information de nom ;
A1, obtention des codes d'image fixés dans l'unité de tableau sur demande par l'intermédiaire de l'unité de lecture d'images du dispositif de lecture de points ;
A2, réception par l'unité de traitement numérique du dispositif de lecture de points des codes d'image obtenus par l'unité de lecture d'images et décodage des codes d'image pour obtenir les codes d'information qui représentent les fichiers de sortie ;
A3, obtention par l'unité de traitement numérique de l'information du nom des fichiers de sorties correspondant aux codes d'information selon le tableau d'informations ;
A4, envoi par l'unité de traitement numérique des instructions qui font que le dispositif de lecture de points est relié au moteur de recherche nommé d'internet, au module de réseau ;
A5, connexion du module de réseau du dispositif de lecture de points aux moteurs de recherche et obtention du code source de la page web correspondante ;
A6, envoi par l'unité de traitement numérique des informations de recherche qui contiennent l'information de nom du fichier de sortie à rechercher au module de réseau ;
A7, transmission par le module de réseau des instructions de recherche aux moteurs de recherche et faire stocker par les moteurs de recherche lesdits fichiers de sortie, selon l'information du nom des fichiers audio, de l'adresse IP de recherche des serveurs de réseau, et réception des résultats de recherche remontés par les moteurs de recherche ;
A8, transmission par le module de réseau des résultats de recherche remontés par les moteurs de recherche à l'unité de traitement numérique ;
A9, connexion du dispositif de lecture de points aux serveurs de réseau dans les résultats de recherche et téléchargement ou lecture des fichiers de sortie stockés dans les serveurs de réseau en ligne.

10. Procédé selon la revendication 9 dans lequel ledit procédé d'obtention du fichier audio/vidéo réseau comprend de plus :
la sélection par l'unité de traitement numérique du dispositif de lecture de points de l'adresse IP des serveurs de réseau avec la vitesse de connexion la plus rapide parmi les résultats de recherche et réalisation de la connexion du dispositif de lecture de points aux serveurs de réseau de manière à obtenir les fichiers de sortie.
